# EUROPÄISCHE PATENTSCHRIFT

(11) **EP 2 676 531 B1**
(45) Veröffentlichungstag und Bekanntmachung des Hinweises auf die Patenterteilung: **13.11.2019**
(21) Anmeldenummer: 12715560.4
(22) Anmeldetag: 16.02.2012
(51) Int. Cl.: H05B 37/02

(54) **KOMBINIERTE SENSOR/NOTLICHT-EINHEIT FÜR EIN BELEUCHTUNGS- SYSTEM**
COMBINED SENSOR/EMERGENCY LIGHT UNIT FOR A LIGHTING SYSTEM
UNITÉ COMBINÉE DE DÉTECTION / D'ÉCLAIRAGE DE SECOURS POUR SYSTÈME D'ÉCLAIRAGE

(30) Priorität: 17.02.2011 DE 102011004304; 30.05.2011 DE 102011076714
(43) Veröffentlichungstag der Anmeldung: 25.12.2013
(73) Patentinhaber: Tridonic GmbH & Co KG, 6851 Dornbirn (AT)
(72) Erfinder: SCHMUCKI, David, 8750 Weinfelden (CH)
(74) Vertreter: Rupp, Christian
(86) Internationale Anmeldenummer: PCT/AT2012/000033
(87) Internationale Veröffentlichungsnummer: WO 2012/109686

(56) Entgegenhaltungen:
- EP-A1- 1 689 214
- WO-A1-2010/115801
- WO-A2-03/094579
- DE-A1-102005 028 206
- GB-A- 2 404 474
- US-A1- 2009 180 271
- US-B2- 7 598 631
- ALONSO J M ET AL: "A smart-lighting emergency ballast for fluorescent lamps based on microcontroller", PROCEEDINGS OF THE ANNUAL APPLIED POWER ELECTRONICS CONFERENCE AND EXPOSITION (APEC). SAN DIEGO, MAR. 7 - 11, 1993; [PROCEEDINGS OF THE ANNUAL APPLIED POWER ELECTRONICS CONFERENCE AND EXPOSITION (APEC)], NEW YORK, IEEE, US, Bd. CONF. 8, 7. März 1993 (1993-03-07), Seiten 549-555, XP010111283, DOI: 10.1109/APEC.1993.290717 ISBN: 978-0-7803-0983-8
- "DALI MSensor, Multisensor für DALI System", , 10 December 2010 (2010-12-10), pages 1-6, XP055253744, Retrieved from the Internet: URL:http://www.tridonic.com/com/de/downloa d/data_sheets/DS_DALI_MSensor_de.pdf [retrieved on 2016-02-29]
- 3 4 Siemens: "Application program description Subject to change without prior notice Use of the application program", , 1 February 2007 (2007-02-01), pages 1-12, XP055518005, Retrieved from the Internet: URL:https://cache.industry.siemens.com/dl/ files/856/44007856/att_91407/v1/802311_apb _e.pdf [retrieved on 2018-10-23]

## Beschreibung

Die Erfindung betrifft eine Notlicht-Einheit für ein Beleuchtungs-System, insbesondere für ein solches nach dem DALI-Standard, wobei die Notlicht-Einheit wenigstens ein Leuchtmittel, vorzugsweise wenigstens eine LED, eine Betriebsschaltung, sowie einen Speicher für elektrische Energie aufweist.

Für moderne Beleuchtungs-Systeme wurde der DALI-Standard ("DALI" steht für Digital Adressable Lighting Interface) entwickelt. Diese Norm sieht vor, dass eine Vielzahl von Aktoren, wie Beleuchtungs-Einheiten, Licht-Sensoren und auch Notlicht-Einheiten, von einer Zentrale aus über einen DALI-Bus ansteuerbar sind. Dem DALI-Bus wird in der Zentrale außer Befehlsdaten noch eine Gleichspannung von 9,5 Volt bis höchstens 22,5 Volt zugeführt, welche für solche Aktoren die Betriebsspannung bildet, die keinen Zugang zum Wechselspannungsnetz haben oder nicht mit diesem verbunden werden sollen.

Der DALI-Bus steht also als Beispiel für einen Datenbus, der im Ruhezustand eine Spannung, insbesondere eine DC-Spannung führt.

Im Hinblick darauf, dass die DALI-Norm zulässt, dass bis zu 64 adressierbare Aktoren an den DALI-Bus angeschlossen werden können, versteht es sich, dass für den Gleichstrom, den ein Aktor von dem DALI-Bus entnehmen darf, eine Obergrenze festgelegt ist, die 2 mA beträgt. Die höchstzulässige Gesamtstromentnahme liegt bei 250 mA. Das lässt Spielraum für einige die Obergrenze überschreitende Ausnahmen. Die unter die Ausnahme-Bestimmungen fallenden Aktoren werden als "DALI-Steuergeräte" bezeichnet. Zu ihnen zählen Signalgeber, wie beispielsweise Lichtsensoren, die häufig an solchen Stellen angebracht werden müssen, an denen ein Anschluss an das Wechselstromnetz nicht oder nur schlecht möglich ist. Das bedeutet, dass diese Signalgeber selbständig untereinander kommunizieren können, sie können auch Multi-Master fähig sein, d.h. in einem Bussystem dürfen mehrere aktive Master vorliegen. Oft sind derartige "DALI-Steuergeräte" heutzutage als sogenannte Multi-Sensoren ausgebildet, d.h. sie kombinieren die Funktionalität verschiedener Sensoren wie beispielsweise einen Lichtsensor, Anwesenheitssensor, Bewegungssensor und / oder Sensor für eine IR-Schnittstelle.

Nicht zu den "DALI-Steuergeräten" gehören Notlicht-Einheiten, die beim Stand der Technik an das Wechselstromnetz angeschlossen sind.

Notlicht-Einheiten haben die Aufgabe, bei Ausfall der Stromversorgung für die beteiligten Aktoren dafür zu sorgen, dass der betreffende Raum, trotzdem wieder beleuchtet wird. Dazu weisen sie einen wiederaufladbaren Speicher für elektrische Energie auf oder sind mit einem solchen verbunden. Bei diesem Speicher für elektrische Energie handelt es sich im einfachsten Fall um einen Kondensator, meistens jedoch um einen Akkumulator oder ein Batterie-Pack. Der Speicher für elektrische Energie muss einen normgemässen Notlicht-Betrieb bspw. von mindestens 3 Stunden gewährleisten und innerhalb von 24 Stunden wieder aufladbar sein. Der für die Wiederaufladung des Speichers für elektrische Energie erforderliche Strom wird bei Notlicht-Einheiten gemäss dem Stand der Technik durch Gleichrichtung aus dem Wechselstromnetz gewonnen. Dazu ist ein entsprechender Anschluss an das Wechselstromnetz notwendig.

Die WO 03/094579 A2 offenbart ein Übertragungsprotokoll für ein Beleuchtungssystem.

Die US 2009/180271 A1 offenbart eine Nachtlicht-Taschenlampe.

Die GB 2 404 474 A offenbart ein Notlichtüberwachungssystem mit Lichtsteuerung.

Der Erfindung liegt die Aufgabe zugrunde, eine alternative oder zusätzliche Möglichkeit für das Laden des Speichers für elektrische Energie in einer Notlicht-Einheit anzugeben.

Als Lösung wird vorgeschlagen, die Notlicht-Einheit mit einem Niedervolt-Spannungsversorgungsanschluss zu versehen, an dem eine DC-Busspannung anlegbar ist, um den Speicher für elektrische Energie zu laden.

Der Bus kann natürlich optional weiterhin zur unidirektionalen oder bidirektionalen Signalübertragung mit der Notlicht-Einheit dienen. Es wird diesbezüglich bspw. auf die Möglichkeiten des DALI-Standards verwiesen.

Unter "Niedervolt-Spannung" ist dabei eine Spannung zu verstehen, deren Amplitude weniger als 20% einer Netzversorgungsspannung beträgt.

Eine bevorzugte Ausgestaltung der erfindungsgemäßen Notlicht-Einheit kann darin bestehen, dass die Notlicht-Einheit eine Betriebsschaltung aufweist, die dazu ausgebildet ist, die Spannung an dem Niedervolt-Spannungsversorgungsanschluss (Niedervolt = wesentlich niedriger als Netzspannung, vorzugsweise weniger als 20V_{DC}) zu überwachen und einen dauerhaften Ausfall (dauerhaft= länger als die Bitdauer des digitalen Busses) der Spannung als Notlicht-Situation zu bewerten und dementsprechend die Leuchtmittel zu aktivieren. Es wird somit ein Busspannungsausfall (Wegfall der Niedervolt-DC Spannung) als Notlicht-Situation ausgewertet, d.h. die Betriebsschaltung aktiviert die zugeordneten Leuchtmittel.

Die Verwendung einer Notlicht-Einheit mit den vorstehend angegebenen Merkmalen ist besonders geeignet in einem Notlicht-System, das einen Bus aufweist, der im Ruhezustand eine DC-Spannung führt. Durch einen Bus-Signalgeber, insbesondere ein busfähiges Sensor-Modul, der an dem Bus angeschlossen ist, kann bspw. die Busspannung an eine in dem Bus-Signalgeber integrierte oder separat vorliegende, aber verbundene Notlicht-Einheit weitergeschleift werden.

Um bei einer nach dem DALI-Standard konzipierten Notlicht-Einheit den die Stromentnahme beschränkenden Bestimmungen des DALI-Standards zu genügen, wird vorgeschlagen, die Notlicht-Einheit mit einem sog. DALI-Steuergerät zu vereinigen oder zu verbinden, dem die Entnahme eines erhöhten Versorgungsstromes von dem DALI-Bus zusteht.

Die so gebildete kombinierte Sensor-/Notlicht-Einheit erfüllt zwei Funktionen. Sie hat eine Verringerung des Herstellungs- und Montageaufwandes zur Folge und gewährleistet, dass die beschränkenden Bestimmungen der DALI-Norm durch die Wiederaufladung des Speichers ausgehend von der Busspannung nicht verletzt werden.

Die Notlicht-Einheit, das DALI-Steuergerät, der Energiespeicher (wiederaufladbare Speicher) und das Not-Leuchtmittel werden zweckmäßigerweise in einem gemeinsamen Gehäuse angeordnet.

Das Gehäuse kann ein nach oben offener und zur Befestigung an der Decke des zu beleuchtenden Raumes bestimmter Hohlkörper sein, durch dessen Unterseite die Sensor-Optik und das Not-Leuchtmittel hervortreten.

Vorzugsweise gestaltet man das Gehäuse als rotationssymmetrischen Körper, der vorzugsweise die Form eines Kegelstumpfes hat, und bei dem die Sensor-Optik in zentraler Position angeordnet und von mehreren die Not-Leuchtmittel bildenden LEDs ringförmig umgeben ist.

Insgesamt ergibt sich so eine kombinierte busfähige Sensor-/Notlicht-Einheit für ein Beleuchtungs-System, bei dem in einem gemeinsamen Gehäuse angeordnet sind:
eine Notlicht-Einheit,
ein Speicher für elektrische Energie,
ein Sensor-Modul,
und
Not-Leuchtmittel, wie bspw. eine oder mehrere LED(s),e,
wobei die Notlicht-Einheit und das Sensor-Modul mit einem im Ruhezustand Spannung führenden Bus des Beleuchtungs-Systems verbunden sind, und
wobei die Notlicht-Einheit mit dem Speicher für elektrische Energie und dem Not-Leuchtmittel verbunden ist.

Der Bus kann natürlich optional weiterhin zur unidirektionalen oder bidirektionalen Signalübertragung mit der Notlicht-Einheit und/oder Sensor-Modul dienen, die eine gemeinsame oder getrennte Busadressen aufweisen können.

Mit der vorstehend beschriebenen kombinierten Sensor-/Notlicht-Einheit können die Not-Leuchtmittel (16) aktiviert werden, wenn
(a) die Stromversorgung für das Beleuchtungssystem ausfällt und/oder
(b) die Raumhelligkeit zu gering ist und der Lichtsensors (19, 20) ein entsprechendes Ausgangssignal erzeugt und/oder
(c) von der Zentrale oder anderer Stelle über den Bus (2) ein entsprechender Einschaltbefehl übermittelt wird.

Kennzeichnend für das Betreiben der vorstehend angegebenen Notlicht-Einheit oder der kombinierten Sensor/Notlicht-Einheit oder des Notlicht-Systems ist, dass der Speicher für elektrische Energie in der Notlicht-Einheit ausgehend von einer DC-Busspannung geladen wird.

Ein weiterer unabhängiger Betriebsaspekt besteht darin, dass die Notlicht-Einheit den Ausfall einer zugeführten DC-Busspannung erkennt und daraufhin Not-Leuchtmittel aktiviert.

Als DC-Busspannung wird dabei die Spannung bezeichnet, die bspw. an einem Steuerbus zur Lichtsteuerung anliegt, dies kann beispielsweise ein DALI-Bus sein.

Eine nicht beanspruchte Möglichkeit betrifft auch ein Verfahren zum Betrieb einer Notlicht-Einheit, wobei die Notlicht-Einheit ausgehend von einer DC-Busspannung eines Steuerbusses zum Laden eines wiederaufladbaren Energiespeichers mit Spannung versorgt wird.

Eine nicht beanspruchte Möglichkeit betrifft auch ein Verfahren zum Betrieb einer Notlicht-Einheit, wobei die Notlicht-Einheit den Ausfall einer zugeführten DC-Busspannung eines Steuerbusses erkennt und daraufhin Not-Leuchtmittel aktiviert.

Weitere Ausgestaltungen der Erfindung finden sich in den abhängigen Ansprüchen, deren Inhalt in vollem Umfang zur Offenbarung der Beschreibung gezählt werden soll.

Ausführungsbeispiele der Erfindung werden nachfolgend anhand der Zeichnungen beschrieben. Es zeigen:
**Figur 1** eine schematisierte Darstellung eines Beleuchtungs-Systems nach dem Stand der Technik;
**Figur 2** eine Darstellung wie **Figur 1****,** jedoch mit den kombinierten Sensor/Notlicht-Einheiten gemäss der Erfindung; und
**Figur 3** eine Ansicht der Unterseite einer der in **Figur 2** gezeigten erfindungsgemässen kombinierten Sensor-/Notlicht-Einheiten.

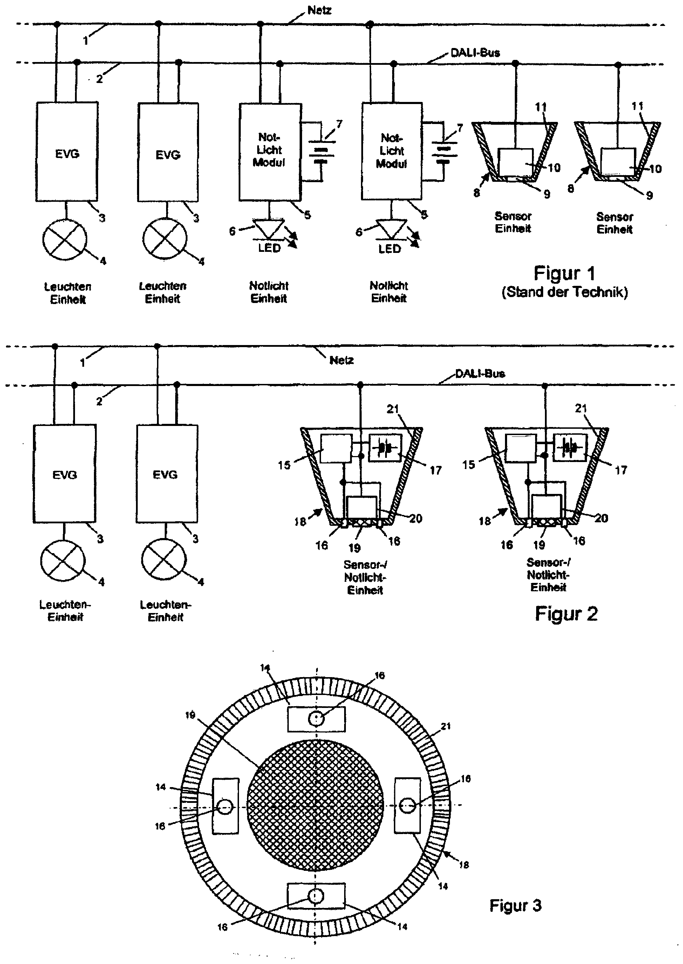

Das in **Figur 1** schematisiert dargestellte busfähige Beleuchtungs-System gemäss dem Stand der Technik weist eine Netzleitung 1 und einen Bus, bspw. einen DALI-Bus 2 auf. Die Netzleitung 1 führt eine Wechselspannung mit bspw. 220-240 Volt. Der DALI-Bus führt im Ruhezustand eine Gleichspannung 9,5-22,5 Volt und stellt somit ein nichtbeschränkendes Beispiel eines Busses dar, der zumindest im Ruhezustand eine DC-Spannung führt.

Zu dem Beleuchtungs-System gehört eine Vielzahl von adressierbaren Leuchten-Einheiten, von denen nur zwei gezeigt sind. Jede Beleuchtungs-Einheit besteht aus einem Betriebsgerät (Elektronisches Vorschaltgerät EVG im Falle von Gasentladungslampen) 3 und einem Leuchtmittel 4, welches von einer Gasentladungslampe, einer Glühlampe, einer oder mehreren LEDs oder dgl. und beliebigen Kombinationen davon gebildet sein kann. Jedes Betriebsgerät 3 ist sowohl mit dem Wechselstrom-Netz 1 als auch mit dem DALI-Bus 2 verbunden. Die Energie zum Betreiben der Leuchtmittel 4 beziehen die Leuchten-Einheiten aus dem Netz 1; die Schaltbefehle erhalten sie über den DALI-Bus 2. Es versteht sich, dass die Leuchten-Einheiten bei Ausfall der Netzspannung inaktiv werden. Außerdem sinkt in einem solchen Fall auch die Spannung auf dem DALI-Bus 2 auf Null.

Weiterhin umfasst das Beleuchtungs-System zwei Sensor-Einheiten (bspw. Lichtsensoren) (8), die nur an den Bus 2 angeschlossen sind. Jede Sensor-Einheit 8 weist ein Gehäuse 11 in Form eines Kegelstumpfes auf. Das Gehäuse 11 ist nach oben offen und nach unten geschlossen. In dem Gehäuse 11 befindet sich ein Sensor-Modul 10, das einerseits mit dem DALI-Bus 2 und andererseits mit einer Sensor-Optik 9 verbunden ist. Letztere durchgreift die untere Stirnwand des Gehäuses 11. Die beiden Lichtsensoren 8 können selbständig miteinander kommunizieren. Die Energie zum Betreiben des Sensor-Moduls 10 wird dem DALI-Bus 2 entnommen. Die beiden Lichtsensoren bilden sog. "DALI-Steuergeräte", denen es erlaubt ist, mehr als 2 mA von dem DALI-Bus 2 zu ziehen.

Schließlich umfasst das Beleuchtungs-System noch zwei Notlicht-Einheiten 5, die sowohl mit der Netzleitung 1 als auch mit dem Bus 2 verbunden ist. Die Notlicht-Einheit 5 ist ferner mit einem wiederaufladbaren Speicher 7 für elektrische Energie bpsw. in Form einer wiederaufladbaren Batterie oder eines Akkus verbunden. Jede Notlicht-Einheit 5 weist ferner ein Leuchtmittel bspw. in Form mindestens einer LED 6 auf, die mit der Notlicht-Einheit 5 verbunden ist. Die elektrische Energie zum Betreiben der LED 6 entnimmt der Notlicht-Einheit 5 dem wiederaufladbaren Speicher 7 für elektrische Energie. Das Wiederaufladen des Speichers 7 erfolgt ebenfalls über die Notlicht-Einheit 5, und zwar entnimmt diese dazu Energie von der Netzleitung 1. Die Notlicht-Einheit 5 wandelt dazu intern die Netzwechselspannung in eine niedrige Lade-Gleichspannung um, es ist somit zumindest ein gleichrichtendes Element notwendig.

Die Notlicht-Einheit wird eingeschaltet, wenn die Stromversorgung für die Leuchten-Einheiten zusammenbricht, wodurch diese außer Funktion gesetzt werden. Alternativ dazu können die Notlicht-Einheiten aktiviert werden, wenn sie einen entsprechenden Befehl über den DALI-Bus 2 von der Zentrale erhalten. Das kann dann der Fall sein, wenn eine der Sensor-Einheiten 8 an die Zentrale meldet, dass in dem überwachten Raum nicht genügend Helligkeit herrscht. Es ist aber auch möglich, dass eine entsprechende Meldung von einer der Sensor-Einheiten 8 über den DALI-Bus 2 direkt (also ohne Einschaltung der Zentrale) an die Notlicht-Einheiten übermittelt wird. Schließlich besteht noch die Möglichkeit, dass die Notlicht-Einheiten den Zusammenbruch der Netzspannung selbst registrieren und entsprechend reagieren. Die Notlicht-Einheiten erhalten die entsprechende Information direkt vom Netz 1 oder von dem DALI-Bus 2, weil in diesem Fall auch die DALI-Gleichspannung auf Null sinkt.

Das der Erfindung entsprechende Beleuchtungs-System gemäß **Figur 2** umfasst - ebenso wie das Beleuchtungs-System gemäß Stand der Technik nach **Figur 1** - zwei Leuchten-Einheiten, welche die gleichen Bezugsziffern aufweisen.

Statt der separat vorgesehenen Notlicht-Einheiten und Sensor-Einheiten in Figur 1 sind in **Figur 2** jedoch kombinierte Sensor-/Notlicht-Einheiten 18 vorgesehen. Jede Sensor-/Notlicht-Einheit 18 hat ein Gehäuse 21, das dem Gehäuse 11 der Sensor-Einheiten 8 in **Figur 1** ähnlich sein kann. Das Gehäuse 21 ist bspw. ein nach oben offener Hohlkörper, der vorzugsweise die Form eines konisch nach unten zulaufenden Kegelstumpfes hat. Er ist zur Befestigung an der Decke des zu überwachenden und zu beleuchtenden Raumes bestimmt. In dem Hohlraum jedes der Gehäuse 21 befindet sich eine Notlicht-Einheit 15, ein Sensor-Modul 20 und ein wiederaufladbarer Speicher 17 für elektrische Energie. Durch die Bodenwand jedes der beiden Gehäuse 21 greift jeweils eine Sensor-Optik 19, die mit dem zugehörigen Sensor-Modul 20 verbunden ist. Der Sensor-Modul 20 ist ferner - ebenso wie die Notlicht-Einheit 15 vorzugsweise elektrisch leitend für DC-Strom mit dem Bus 2 verbunden.

Das Sensor-Modul 20 kann entweder nur durch einen einzelnen Sensor mit einer Funktionalität gebildet werden oder aber er kann durch eine Kombination von verschiedenen Sensoren gebildet werden, beispielsweise eine Kombination von Lichtsensor, Anwesenheitssensor, Bewegungssensor und / oder Sensor für eine IR-Schnittstelle (Infrarot-Schnittstelle). Das Sensor-Modul 20 bildet somit ein Steuergerät, welches gemäß dem DALI-Standard kommunizieren kann.

Ferner ist die Notlicht-Einheit 15 jeder Sensor-/Notlicht-Einheit 18 mit dem wiederaufladbaren Speicher 17 für elektrische Energie verbunden. Die Notlicht-Einheit 15 enthält eine Betriebsschaltung für die Ansteuerung der Not-Leuchtmittel (im Beispiel LED(s)) 16, also für eine Speisung der LED 16 mit Strom, die aus dem wiederaufladbaren Speicher 17 für elektrische Energie gespeist wird. Die Sensor-Optik 19 ist bei jeder Sensor-/Notlicht-Einheit ringförmig von vier LEDs 16 umgeben, die jeweils auf einer Substratplatte 14 angeordnet sind. Die Betriebsschaltung für die Ansteuerung der Not-Leuchtmittel 16 kann durch einen Schaltregler oder auch durch einen Linearregler gebildet werden. Optional kann diese Betriebsschaltung potentialgetrennt ausgeführt sein. Die Notlicht-Einheit 15 weist zusätzlich eine Ladeschaltung zum Laden des wiederaufladbaren Speichers 17 auf. Diese Ladeschaltung kann beispielsweise durch einen Schaltregler oder auch durch einen Linearregler gebildet sein. Optional kann diese Ladeschaltung auch potentialgetrennt ausgeführt sein und beispielsweise einen Transformator aufweisen. Die Ladeschaltung zum Laden des wiederaufladbaren Speichers 17 und die Betriebsschaltung für die Ansteuerung der Not-Leuchtmittel können auch durch einen bidirektionalen Schaltregler gebildet werden, so dass dieser abhängig vom Betriebszustand wahlweise das Laden des wiederaufladbaren Speichers 17 und / oder die Ansteuerung der Not-Leuchtmittel übernehmen kann.

Diese Anordnung kann man am besten der **Figur 3** entnehmen. Das Gehäuse 21 der Sensor-/Notlicht-Einheit 18 kann aber auch andere Bauformen aufweisen, es kann beispielsweise in Form einer Pyramide oder einer Halbkugel ausgebildet sein.

Ein Unterscheid zwischen den Beleuchtungs-Systemen nach den **Figuren 1 und 2** ist, dass die Notlicht-Einheit 15 der Sensor-/Notlicht-Einheiten 18 in **Figur** 2 mit dem Bus 2 derart verbunden ist, dass der Speicher für elektrische Energie vorzugsweise ohne Potentialtrennung und ohne Gleichrichtung ausgehend von einer DC-Spannung des Busses geladen werden kann.

Zum Laden des Speichers für elektrische Energie ist also keine Netzversorgung notwendig, vorzugsweise weist die Sensor-/Notlicht-Einheit gemäss der Erfindung somit auch keinen Netzspannungs-Anschluss auf.

Der wiederaufladbare Speicher 17 für elektrische Energie in **Figur 2** bezieht seine Energie zur Wiederaufladung aus dem DALI-Bus 2. Somit ist die Sensor-/Notlicht-Einheit 18, welche wenigstens ein Not-Leuchtmittel 16 (vorzugsweise wenigstens eine LED), eine Notlicht-Einheit 15 sowie einen wiederaufladbaren Speicher 17 für elektrische Energie aufweist, dazu ausgelegt, an einem Niedervolt-Spannungsversorgungsanschluss, ausgehend von einer DC-Busspannung (dem DALI-Bus 2) und vorzugsweise ohne Potentialtrennung, mit elektrischer Energie zum Laden des wiederaufladbaren Speichers 17 für elektrische Energie versorgt zu sein. Es ist also die Sensor-/Notlicht-Einheit 18 dazu ausgelegt, ausgehend von einer DC-Busspannung des Busses 2 über einen Niedervolt-Spannungsversorgungsanschluss mit elektrischer Energie zum Laden des wiederaufladbaren Speichers 17 für elektrische Energie versorgt zu werden.

Die Notlicht-Einheit 15 weist zumindest eine Betriebsschaltung auf und ist dazu ausgebildet, die Spannung an dem Niedervolt-Spannungsversorgungsanschluss zu überwachen und einen dauerhaften Ausfall der Spannung als Notlicht-Situation zu bewerten und dementsprechend die Leuchtmittel 16 zu aktivieren. Der Niedervolt-Spannungsversorgungsanschluss ist dabei mit dem DALI-Bus 2 verbunden. Alternativ oder zusätzlich kann auf dem DALI-Bus 2 auch ein Befehl zum Wechsel in eine Notlicht-Situation von einer Zentrale oder einem Steuergerät gesendet werden, beispielsweise wenn dieses einen Ausfall der Spannung erkennt. Es ist beispielsweise möglich, dass die Spannung an dem DALI-Bus 2 noch kurzzeitig weiterbestehen kann, da diese von einem Energiespeicher versorgt wird, der noch für einen gewissen Zeitraum Energie zum Speisen des DALI-Bus 2 liefern kann.

Wenn eine entsprechende Auswahl der LEDs 16 getroffen wird, dahingehend, dass diese bei hoher Leuchtkraft relativ wenig Strom brauchen, und wenn ferner die Zahl der Sensor-/Notlicht-Einheiten auf eine bestimmte Zahl begrenzt wird, ist es möglich, den wiederaufladbaren Speicher 17 innerhalb von 24 Stunden aus der von dem DALI-Bus 2 zur Verfügung gestellten Energie wiederaufzuladen, und zwar mit einem Ladestrom, der 2 mA übersteigt. Dies ist zulässig, weil die erhöhte Stromentnahme für die Sensor-Einheit erlaubt ist, da diese als "DALI-Steuergerät" eingestuft ist.

Auch bezüglich des wiederaufladbaren Speichers 17 muss eine entsprechende Auswahl getroffen werden, so dass die vier LEDs 16 im Notlicht-Fall den überwachten Raum drei Stunden lang ausreichend beleuchten können. Für den wiederaufladbaren Speicher 17 eignet sich besonders gut eine wiederaufladbare Batterie, beispielsweise ein Pack von NiMh-Akku-Zellen oder auch Li-Ionen-Zellen. Der wiederaufladbare Speicher (17) für elektrische Energie kann auch aus einem Pack von Einzelzellen von Batterien bestehen.

In einer nicht beanspruchte Möglichkeit kann der wiederaufladbare Speicher 17 aber auch außerhalb der Sensor-/Notlicht-Einheit 18 angeordnet sein, damit diese weniger Platzbedarf aufweist. In diesem Fall kann der wiederaufladbare Speicher 17 mit der Sensor-/Notlicht-Einheit 18 elektrisch verbunden sein.

Dadurch, dass die neue kombinierte Sensor-/Notlicht-Einheit 18 nicht zwingend einen Netzanschluss benötigt, besteht eine größere Freiheit im Hinblick auf ihre Positionierung in dem zu überwachenden Raum. Nicht zuletzt wird durch das Zusammenfügen zweier Aktoren zu nunmehr nur noch einem einzigen Herstellungs- und Montagekosten gespart.

Optional ist es möglich, dass die kombinierte Sensor-/Notlicht-Einheit 18 im Falle einer Notlicht-Situation über das Sensor-Modul 20 weiterhin eine Überwachung durchführt. Dabei können beispielsweise auch die Ergebnisse dieser Überwachung abgespeichert werden und nach dem Ende der Notlicht-Situation können entsprechende Signale auf dem DALI-Bus 2 an die weiteren Bus-Teilnehmer weitergegeben werden. Beispielsweise könnte das Sensor-Modul 20 einen Sensor für eine IR-Schnittstelle aufweisen und somit könnte eine Kommunikation beispielsweise über die IR-Schnittstelle auch in einer Notlicht-Situation möglich sein. Es könnten also beispielsweise über die IR-Schnittstelle empfangene Befehle nach Ende der Notlicht-Situation weitergegeben werden. Somit ist eine lückenlose Überwachung mittels der kombinierten Sensor-/Notlicht-Einheit 18 auch in einer Notlichtsituation möglich und auch ein Aufzeichnen der Historie der Überwachung durch das Sensor-Modul 20 möglich.

Die Not-Leuchtmittel 16 können auch für andere Zwecke als eine Notbeleuchtung genutzt werden. Beispielsweise können sie zur Adressierung der kombinierten Sensor-/Notlicht-Einheit 18 genutzt werden (beispielsweise indem sie durch Blinken eine Adresszuweisung bestätigen oder die zugewiesene Adresse kodiert ausgeben), sie können auch den Empfang von Signalen bestätigen (beispielsweise durch Blinken) oder zur Beleuchtung außerhalb einer Notlicht-Situation (wie im folgenden Beispiel erklärt) genutzt werden.

Gemäß einem nicht beanspruchten Beispiel kann die Notlicht-Einheit 15 auch einen Anschluß für das Wechselstrom-Netz 1 aufweisen. Dieser kann beispielsweise für eine schnellere Wiederaufladung des wiederaufladbaren Speichers 17, für eine Erkennung einer Notlicht-Situation und / oder auch den Betrieb der Not-Leuchtmittel 16 im Falle einer normalen Beleuchtung (d.h. wenn keine Notlicht-Situation vorliegt sondern eine Netzspannung am Wechselstrom-Netz 1 anliegt) genutzt werden. Auch kann eine kombinierte Wiederaufladung sowohl über den Bus 2 als auch über das Wechselstrom-Netz 1 möglich sein. Dies kann beispielsweise erforderlich sein, wenn das Wechselstrom-Netz 1 für längere Zeiträume abgeschaltet wird aber die DC-Busspannung des Bus 2 aufrecht bleibt, beispielsweise in einem Stand-by Betriebsmodus (Ruhemodus). Es ist dabei auch möglich, dass die vom Bus 2 aufgenommene Energie zum Laden des wiederaufladbaren Speichers 17 nur einer rascheren Entladung dieses Speichers entgegenwirkt.

Dies kann der Fall sein, wenn nur ein verhältnismäßig geringer Strom zum Laden des wiederaufladbaren Speichers 17 genutzt wird, der zwar nicht zum völligen Wiederaufladen des wiederaufladbaren Speichers 17 ausreicht, aber eine rasche Entladung oder sogar Tiefentladung wiederaufladbaren Speichers 17 verhindern oder zumindest verzögern kann. Beispielsweise weist diese Notlicht-Einheit 15 eine kombinierte Ladeschaltung mit Eingängen zum Anschluß an den Bus 2 und das Wechselstrom-Netz 1 auf, oder es sind zwei getrennte Ladeschaltungen vorhanden. Eine derartige Notlicht-Einheit 15 kann mit einer Sensor-Modul 20 kombiniert werden (direkt in einem Gehäuse oder nur mittels elektrischer oder kommunikativer Verbindung) und es kann somit auch eine kombinierte Sensor-/Notlicht-Einheit (18) gebildet werden.

## Patentansprüche

1. Kombinierte Sensor/Notlicht-Einheit (18) für ein Beleuchtungs-System, aufweisend:
- ein Gehäuse (21),
- einen wiederaufladbaren Speicher (17) für elektrische Energie,
- eine Ladeschaltung zum Laden des wiederaufladbaren Speichers (17),
- ein Not-Leuchtmittel (16), und
- einen Niedervolt-Spannungsversorgungsanschluss, wobei die kombinierte Sensor/Notlicht-Einheit (18) durch den Niedervolt-Spannungsversorgungsanschluss mit einem Bus (2) zur Lichtsteuerung des Beleuchtungs-Systems verbindbar ist und dem wiederaufladbaren Speicher (17) mittels der Ladeschaltung zur Wiederaufladung Strom von dem Bus (2) zuführbar ist, und wobei der Bus (2) ein DALI-Bus ist, welcher im Ruhezustand eine Spannung führt,
wobei die kombinierte Sensor/Notlicht-Einheit (18) ferner ein DALI-Steuergerät aufweist, welchem ein erhöhter Versorgungsstrom von dem DALI-Bus zusteht, wobei der erhöhte Versorgungsstrom größer als 2 mA ist, und das DALI-Steuergerät ein busfähiges Sensor-Modul (20) ist,
wobei die kombinierte Sensor/Notlicht-Einheit (18) ferner eine Betriebsschaltung aufweist, die dazu ausgebildet ist, die Spannung an dem Niedervolt-Spannungsversorgungsanschluss zu überwachen und einen dauerhaften Ausfall der Spannung als Notlicht-Situation zu bewerten und dementsprechend das Not-Leuchtmittel (16) zu aktivieren, und
wobei das DALI-Steuergerät, der wiederaufladbare Speicher (17), die Ladeschaltung, die Betriebsschaltung und das Not-Leuchtmittel (16) in dem Gehäuse (21) angeordnet sind.

2. Kombinierte Sensor/Notlicht-Einheit (18) nach Anspruch 1,
bei der das Gehäuse (21) ein nach oben offener und zur Befestigung an einer Decke eines zu beleuchtenden Raumes bestimmter Hohlkörper ist, durch dessen Unterseite eine Sensor-Optik (19) und das Not-Leuchtmittel (16) hervortreten.

3. Kombinierte Sensor/Notlicht-Einheit (18) nach Anspruch 2,
bei der das Gehäuse (17) ein rotationssymmetrischer Körper ist und vorzugsweise die Form eines Kegelstumpfes hat, und
bei der die Sensor-Optik (19) in zentraler Position angeordnet und von mehreren das Not-Leuchtmittel (16) bildenden LEDs ringförmig umgeben ist.

4. Kombinierte Sensor/Notlicht-Einheit (18) nach einem der Ansprüche 1 bis 3,
bei der der wiederaufladbare Speicher (17) für elektrische Energie eine wiederaufladbare Batterie ist.

## Claims

1. A combined sensor/emergency light unit (18) for a lighting system, having:
- a housing (21),
- a rechargeable store (17) for electrical energy,
- a charging circuit for charging the rechargeable store (17),
- an emergency lighting means (16), and
- a low voltage-voltage supply connection, wherein the combined sensor/emergency light unit (18) can be connected by the low voltage-voltage supply connection to a bus (2) for the light control of the lighting system and the rechargeable store (17) can be supplied by means of the charging circuit for recharging current from the bus, and wherein the bus (2) is a DALI bus, which maintains a voltage in a non-operating state,
wherein the combined sensor/emergency light unit (18) also has a DALI control device, which is given an increased supply current from the DALI bus,
wherein the increased supply current is greater than 2 mA, and the DALI control device is a bus-capable sensor module (20),
wherein the combined sensor/emergency light unit (18) also has an operating circuit, which is designed to monitor the voltage at the low voltage-voltage supply connection and to assess a permanent failure of the voltage as an emergency light situation and accordingly to activate the emergency lighting means (16), and
wherein the DALI control device, the rechargeable store (17), the charging circuit, the operating circuit and the emergency lighting means (16) are arranged in the housing (21).

2. The combined sensor/emergency light unit (18) according to Claim 1,
in which the housing (21) is a hollow body upwardly open and intended for fastening to a ceiling of a room to be illuminated, through the underside of which a sensor optical system (19) and the emergency lighting means (16) protrude.

3. The combined sensor/emergency light unit (18) according to Claim 2,
in which the housing (17) is a rotationally symmetrical body and preferably has the shape of a truncated cone, and
in which the sensor optical system (19) is arranged in a central position and is surrounded annularly by several LEDs forming the emergency lighting means (16).

4. The combined sensor/emergency light unit (18) according to any one of Claims 1 to 3,
in which the rechargeable store (17) for electrical energy is a rechargeable battery.

## Revendications

1. Unité combinée capteur/éclairage de secours (18) pour un système d'éclairage, comprenant :
- un boîtier (21),
- un accumulateur rechargeable (17) pour énergie électrique,
- un circuit de charge pour la charge de l'accumulateur rechargeable (17),
- un moyen d'éclairage de secours (16) et
- un raccordement d'alimentation basse tension,
l'unité combinée capteur/éclairage de secours (18) pouvant être reliée, à l'aide du raccordement d'alimentation basse tension, avec un bus (2) pour le contrôle du système d'éclairage et un courant pouvant être appliqué par le bus à l'accumulateur rechargeable (17) au moyen du circuit de charge pour la recharge et le bus (2) étant un bus DALI qui conduit une tension à l'état de repos,
l'unité combinée capteur/éclairage de secours (18) comprenant en outre un appareil de commande DALI, auquel est appliqué, par le bus DALI, un courant d'alimentation augmenté, le courant d'alimentation augmenté étant supérieur à 2 mA et l'appareil de commande DALI étant un module de capteur (20) compatible avec le bus,
l'unité combinée capteur/éclairage de secours (18) comprenant en outre un circuit de commande qui est conçu pour surveiller la tension au niveau du raccordement d'alimentation basse tension et pour évaluer une chute durable de la tension comme une situation d'éclairage de secours et activer en conséquence le moyen d'éclairage de secours (16) et
l'appareil de commande DALI, l'accumulateur rechargeable (17), le circuit de charge, le circuit de commande et le moyen d'éclairage de secours (16) étant disposés dans le boîtier (21).

2. Unité combinée capteur/éclairage de secours (18) selon la revendication 1, dans laquelle le boîtier (21) étant un corps creux ouvert vers le haut et conçu pour la fixation à un plafond d'une pièce à éclairer, à travers le côté inférieur duquel dépassent une optique de capteur (19) et le moyen d'éclairage de secours (16).

3. Unité combinée capteur/éclairage de secours (18) selon la revendication 2, dans laquelle le boîtier (17) est corps à symétrie de rotation et présente de préférence la forme d'un cône tronqué et
dans laquelle l'optique de capteur (19) est disposée au centre et est entourée de manière annulaire par plusieurs LED constituant le moyen d'éclairage de secours (16).

4. Unité combinée capteur/éclairage de secours (18) selon l'une des revendications 1 à 3,
dans laquelle l'accumulateur rechargeable (17) d'énergie électrique est une batterie rechargeable.
